# EUROPÄISCHE PATENTSCHRIFT

(11) **EP 0 965 009 B1**
(45) Veröffentlichungstag und Bekanntmachung des Hinweises auf die Patenterteilung: **11.06.2003**
(21) Anmeldenummer: 98920469.8
(22) Anmeldetag: 04.03.1998
(51) Int. Cl.: F16J 1/10, F16J 15/48

(54) **KOLBENDRUCKVORRICHTUNG MIT EINER DICHTUNGSVORRICHTUNG**
PRESSURE PISTON ARRANGEMENT COMPRISING A SEAL DEVICE
DISPOSITIF DE PISTON A PRESSION COMPRENANT UNE GARNITURE D'ETANCHEITE

(30) Priorität: 05.03.1997 DE 19708951
(43) Veröffentlichungstag der Anmeldung: 22.12.1999
(73) Patentinhaber: Resonic Instruments AG, 71254 Ditzingen (DE)
(72) Erfinder: FUNCK, Theodor, D-37077 Göttingen (DE)
(74) Vertreter: Hertz, Oliver, Dr.
(86) Internationale Anmeldenummer: EP9801211
(87) Internationale Veröffentlichungsnummer: WO98039584

(56) Entgegenhaltungen:
- EP-A- 0 140 052
- EP-A- 0 261 293
- DE-A- 1 901 274
- DE-C- 4 008 901

## Beschreibung

Die Erfindung betrifft Vorrichtungen zum gas- und flüssigkeitsdichten Trennen verschiedener Räume, insbesondere Kolbendruckvorrichtungen.

Zur Erzeugung hoher Drücke für mechanische Arbeitsverfahren oder für experimentelle Zwecke werden gewöhnlich Kolbenanordnungen verwendet, in denen durch mechanischen Vortrieb eines Kolbens in einem Druckfluid ein Druck aufgebaut und mit geeigneten Mitteln (z.B. Hochdruckleitung) zu einem zu betätigenden Stellglied übertragen wird. Zum effektiven Druckaufbau und zur Erhaltung der Druckstabilität muß der Kolben gegenüber der Wandung des entsprechenden Kolbengefäßes (Zylinder) für das Druckfluid abgedichtet sein. Dabei ist es erforderlich, daß die Dichtung auch unter Wirkung des Arbeitsdrucks kein Druckfluid aus dem Kolbenraum in den Außenraum oder in die Dichtung treten läßt. Verbreitet werden zur Hochdruckerzeugung als Druckfluide hydraulische Flüssigkeiten hoher Viskosität, wie z.B. Öl, Glycerin oder dgl., verwendet. Die hohe Viskosität dieser hydraulischen Flüssigkeiten erlaubt es, wirksame Dichtungen mit verhältnismäßig geringem Aufwand aus Elastomeren herzustellen.

Die Verwendung hochviskoser Druckmedien in Hochdruckvorrichtungen erleichtert die Abdichtung des Systems, hat jedoch den Nachteil, daß die Befüllung und Entlüftung des Systems schwierig und zeitraubend ist. Die Vermeidung von Gaseinschlüssen im Hochdrucksystem stellt dann, insbesondere bei verfahrenstechnischen Anwendungen mit hohen Stabilitätsanforderungen, ein Problem dar.

Allerdings können physikalisch-technische oder chemischtechnische Verfahren erfordern, daß Druckschwankungen weniger als 1/100 at betragen.

Als geeignete, saubere und ungiftige Druckfluide sind niedrigerviskose Druckfluide wie beispielsweise Ethanol und Petrolether bekannt. Niedrigviskose Druckfluide haben jedoch den Nachteil, daß sie in der Regel einen niedrigen Siedepunkt besitzen, so daß eine Dampfbildung im Kolbenbereich möglich ist. Außerdem ist es insbesondere bei Hochdruckanwendungen schwieriger, mit niedrigviskosen Druckfluiden eine wirksame Abdichtung zu erzielen.

Bei Hochdruckvorrichtungen für Arbeitsgeräte (z.B. hydraulische Bagger usw.), bei denen besonders hohe Verstellkräfte aufgebracht werden müssen, ist es bekannt, hydraulische Kolben mit armierten Dichtungen zu betreiben. Derartige Dichtungen werden oft als Kombination von elastischen und plastisch verformbaren Elementen hergestellt. Sie bestehen beispielsweise aus einem plastisch verformbaren Kunststoff, der durch den Kontakt mit der Wand bei genügend hohen Andruckkräften die Abdichtung sicherstellt, und aus einer Spiralfeder, die von diesem Kunststoff teilweise umschlossen wird, und bei niedrigen Drucken für die Abdichtung genügend hohe Anpreßdrucke erzeugt. Bei hohen Drucken muß die direkte Einwirkung des Druckmediums auf die Plastikdichtung die genügend hohen Anpreßdrucke bewirken. Mit Federelementen armierte Dichtungen weisen entschiedende Nachteile auf. Im offenen Spiralfederbereich bilden sich leicht Lufteinschlüsse, die beim Füllen des Drucksystems (hydraulisches System) und späteren Betrieb zu Störungen des Druckaufbaus führen können. Eine Entlüftung der Dichtung ist nur zeitbegrenzt und unter hohem Aufwand möglich. Außerdem sind federarmierte Dichtungen an bestimmte Mindestgrößen gebunden (keine Miniaturisierbarkeit). An der Armierung können Korrosionserscheinungen auftreten. Schließlich kann es bei hohen Drucken (≥ 100 at) zu einer Beschädigung des Kunststoffs durch die Federarmierung oder bei höchsten Drucken zu einer irreversiblen plastischen Deformation der Feder kommen.

Herkömmliche Dichtungsvorrichtungen haben ferner die folgenden Nachteile. Bei Flüssigkeitsdichtungen treten Undichtigkeiten für Gase auf. Dies ist problematisch, falls in der Druckflüssigkeit ein Gas gelöst oder die Druckflüssigkeit niedrigviskos ist. Dies bedeutet, daß bei herkömmlichen Druckvorrichtungen Gase in die Dichtung oder sogar in den Außenraum austreten. Ein weiteres Problem besteht darin, daß bei herkömmlichen Druckvorrichtungen zur Verminderung der Reibung zwischen der Dichtung und Zylinderwand gegebenenfalls die Ausbildung eines Flüssigkeitsfilms vorgesehen ist. Dieser Flüssigkeitsfilm bedeutet wiederum eine Veränderung der Druckflüssigkeitsmenge und somit eine Ungenauigkeit und Instabilität der Druckausbildung. Zahlreiche Druckvorrichtungen sind ferner zum Betrieb mit Standard-Druckflüssigkeiten vorgesehen. Dadurch ist ein Einsatz solcher Dichtungen bei Kompressionsmessungen an beliebigen Flüssigkeitsproben mit gegebenenfalls für die Dichtungen ungünstigen chemischen Eigenschaften nicht möglich. Weitere Nachteile herkömmlicher Druckvorrichtungen betreffen deren fehlende Miniaturisierbarkeit (Aufbau zu komplex) und die Bildung von Gaseinschlüssen in den Dichtungen. Kontaminierungen der Dichtung mit Gasen oder Flüssigkeiten aus dem jeweils verwendeten Druckmedium führen ferner zu Verunreinigungen beim folgenden Betrieb mit anderen Druckmedien.

Es sind ferner Dichtungen bekannt, die aus einer elastisch und einer plastisch deformierbaren Komponente bestehen (siehe z.B. DE-OS 33 15 050). Dabei erfolgt bei niedrigen Drucken ein Anpressen der plastisch deformierbaren Komponente unter Wirkung der elastisch deformierbaren Komponente gegen die Zylinderwand. Die plastisch deformierbare Komponente wird zusätzlich dem Druck des direkt kontaktierenden Druckmediums ausgesetzt, wodurch bei höheren Drucken eine genügend hohe Anpreßkraft gegenüber der abzudichtenden Zylinderwand gewährleistet werden soll. Da die plastisch deformierbare Komponente über große Flächen in direktem Kontakt mit der Flüssigkeit steht und auch die Ränder der plastisch deformierbaren Komponente gegenüber der Zylinderwand bzw. gegenüber dem Kolben dem Druckmedium ausgesetzt sind, kann dieses einseitig in die Dichtung eindringen. Damit ist eine derartige Dichtung für genaue und reproduzierbare Druckeinstellungen im Hochdruckbereich und für eine einfache Entlüftbarkeit der Dichtung ungeeignet.

Aus DE-OS-1 901 247 ist eine Kolben-Zylinder-Anordnung mit vorgespannten Dichtungselementen gemäß dem Oberbegriff des Anspruchs 1 bekannt.

Weitere Kolben-Zylinder- Anordnungen sind aus DE-OS-40 08 901 und DE-OS-33 15 050 bekannt.

Aufgabe der Erfindung ist es, eine verbesserte Kolbendruckvorrichtung anzugeben, die flüssigkeits- und gasdicht ist, die Ausbildung eines hochstabilen Druckes im abgedichteten Raum erlaubt und deren Wirksamkeit unabhängig von der Viskosität angrenzender Fluide ist.

Diese Aufgabe wird durch eine Kolbendruckvorrichtung mit den Merkmalen gemäß Patentanspruch 1 gelost. Vorteilhafte Ausführungsformen der Erfindung ergeben sich aus den Unteransprüchen.

Die Erfindung basiert auf der Idee, eine Kolbendruckvorrichtung anzugeben, bei der ein Kolben axial verschiebbar an einer Kolbenstange verankert ist, wobei zwischen den aufeinanderzuweisenden Endflächen des Kolbens bzw. der Kolbenstange eine Ausnehmung zur formschlussigen Aufnahme einer Dichtungsvorrichtung gebildet ist. In radialer Richtung wird die Ausnehmung von einer Zylinderwand abgedeckt. Die Dichtungsvorrichtung, vor allem eine elastische Komponente der Dichtungsvorrichtung, ist durch den Kolben weitgehend vor dem direkten Kontakt mit dem Druckmedium geschützt. Allerdings konnen die Druckkrafte vom Druckmedium auf die Stirnflache des Kolbens aufgrund dessen axialer Verschiebbarkeit gegenüber der Kolbenstange auf die Dichtungsvorrichtung übertragen werden. Dadurch wird eine Kompression der Dichtungsvorrichtung in der Ausnehmung und dadurch eine Anpressung an die Zylinderwand bewirkt. Der Außendurchmesser des Kolbens ist an den Innendurchmesser des Zylinders so angepaßt, daß in allen Betriebszuständen der Kolbendruckvorrichtung eine axiale Beweglichkeit des Kolbens im Zylinder gewährleistet ist. Durch die Bildung einer Passung zwischen dem Kolben und dem Zylinder wird erreicht, daß der vom Druckmedium auf den Kolben ausgeübte Druck im wesentlichen an der Stirnfläche des Kolbens ausgebildet wird. Zwischen den Kolben und die Zylinderwand kann zwar Druckmedium eindringen, dies jedoch in geringer, reproduzierbarer Menge. Ein weiteres Eindringen des Druckmediums in die Dichtungsvorrichtung wird jedoch im Unterschied zu den herkömmlichen Kolbendruckvorrichtungen im wesentlichen ausgeschlossen, da die Dichtungsvorrichtung nicht direkt an das Druckmedium angrenzt (mit Ausnahme des durch die Passung zwischen dem Kolben und dem Zylinder verbliebenen, vernachlässigbaren Spaltes).

Die Dichtungsvorrichtung ist vorzugsweise eine druckaktivierte Dichtungsvorrichtung, die ein Elastomer und ein unter Druck plastisch verformbares Material enthält. Das Elastomer ist vom verformbaren Material zumindest teilweise ummantelt. Das Elastomer wird vorzugsweise durch einen synthetischen Kautschuk und das unter Druck verformbare Material durch ein Plastomer, vorzugsweise Polytetrafluorethylen (PTFE) oder durch Tetrafluorethylen-Copolymere, gebildet. Die Komponenten der Dichtungsvorrichtung wirken wie folgt zur Bildung der druckaktivierten Dichtung zusammen.

Wenn zwischen zwei aneinandergrenzenden Räumen, die durch die Dichtungsvorrichtung getrennt sind (z.B. Innen- und Außenräume einer Kolbendruckvorrichtung), eine Druckdifferenz herrscht, die gleich oder etwas größer als Null ist, so bewirkt das Elastomer die Abdichtung. Hierzu wird das Elastomer mit einer bestimmten Shore-Härte ausgewählt und unter Vorspannung angebracht, so daß ein genügend großer elastischer Druck auf eine angrenzende Wandung (z.B. Kolbenzylinderwand) zur Erzielung der gewünschten Dichtheit bewirkt wird. In diesem Zustand wird die Gestaltselastizität des Elastomers zur Abdichtung ausgenutzt, während das unter Druck verformbare Material nicht zum Aufbau des elastischen Drucks gegen die Wandung beiträgt. Abweichend von den Eigenschaften herkömmlicher Federarmierungen besitzt das Elastomer eine positive Kompressibilitätscharakteristik, d.h. bei geringen Drucken ist es leicht verformbar und elastisch und bei hohen Drucken ist es nicht verformbar.

Sobald die Druckdifferenz zwischen den Räumen ansteigt (z.B. durch mechanische Betätigung einer mit der Dichtungsvorrichtung versehenen Kolbenvorrichtung), wird die Dichtungsvorrichtung komprimiert. Da die Komprimierbarkeit der ersten Komponente (des Elastomers) gering ist, bewirkt die zunehmende Druckdifferenz bei geeigneter Übermittlung der Druckkräfte auf die Dichtungsvorrichtung eine Verformung der zweiten Komponente (sog. Bridgeman-Effekt). Die Verformung führt zu einemgasund flüssigkeitsdichten Kontakt zwischen der begrenzenden Wandung und der verformbaren Komponente, insbesondere zu einer Einschließung sämtlicher, eventuell auf der Wandung vorhandenen Unebenheiten. Das verformbare Material besitzt zur Bildung einer abstreifenden Trockendichtung einen möglichst geringen Reibungskoeffizienten. Auch diese Forderung wird durch PTFE oder Tetrafluorethylen-Copolymere erfüllt.

Die Dichtungsvorrichtung besitzt vorzugsweise eine Gestalt, die je nach Druckbelastung eine optimale Abdichtung durch eine der Komponenten sicherstellt. Die Dichtungsvorrichtung wird hierzu durch einen Körper aus dem bei Druckausübung verformbaren Material gebildet, in den zumindest teilweise das Elastomer eingelassen ist. Das Elastomer ist so in der Dichtungsvorrichtung angeordnet, daß kein direkter Kontakt mit einer abzudichtenden Gefäßwandung besteht. Das Elastomer ist vielmehr von der Wandungsoberfläche durch das bei Druckausübung verformbare Material getrennt. Bei Anwendung der Erfindung in einer Kolbendruckvorrichtung ist der Körper der Dichtungsvorrichtung in Form einer zylindrischen Hülse aus dem bei Druckausübung verformbaren Material ausgebildet, in das axialsymmetrisch ein Elastomerring eingelassen ist.

Die erfindungsgemäße Kolbendruckvorrichtung enthält in einem Kolbengehäuse einen Kolbenschaft mit einem Kolben, der über ein Verankerungsmittel axial beweglich mit dem Kolbenschaft verbunden ist. In der Ausnehmung zwischen dem Kolben und dem Kolbenschaft ist hülsenförmig die Dichtungsvorrichtung angeordnet, die bei Betriebsbeginn des Kolbens vorgespannt ist und bei Druckaufbau gegen die Wandung des Kolbengehäuses gedrückt wird.

Ausführungsformen der Erfindung werden im folgenden unter Bezug auf die beigefügten Zeichnungen beschrieben. Es zeigen:
- Fig. 1: eine teilweise geschnittene Seitenansicht des plastisch verformbaren Teils einer erfindungsgemäßen Dichtungsvorrichtung;
- Fig. 2: eine Draufsicht auf den plastisch verformbaren Teil der Dichtungsvorrichtung gemäß Fig. 1;
- Fig. 3: teilweise geschnittene Seitenansichten von Teilen der erfindungsgemäßen Kolbendruckvorrichtung (zerlegt); und
- Fig. 4: eine Schnittansicht der Kolbendruckvorrichtung in zusammengesetztem Zustand.

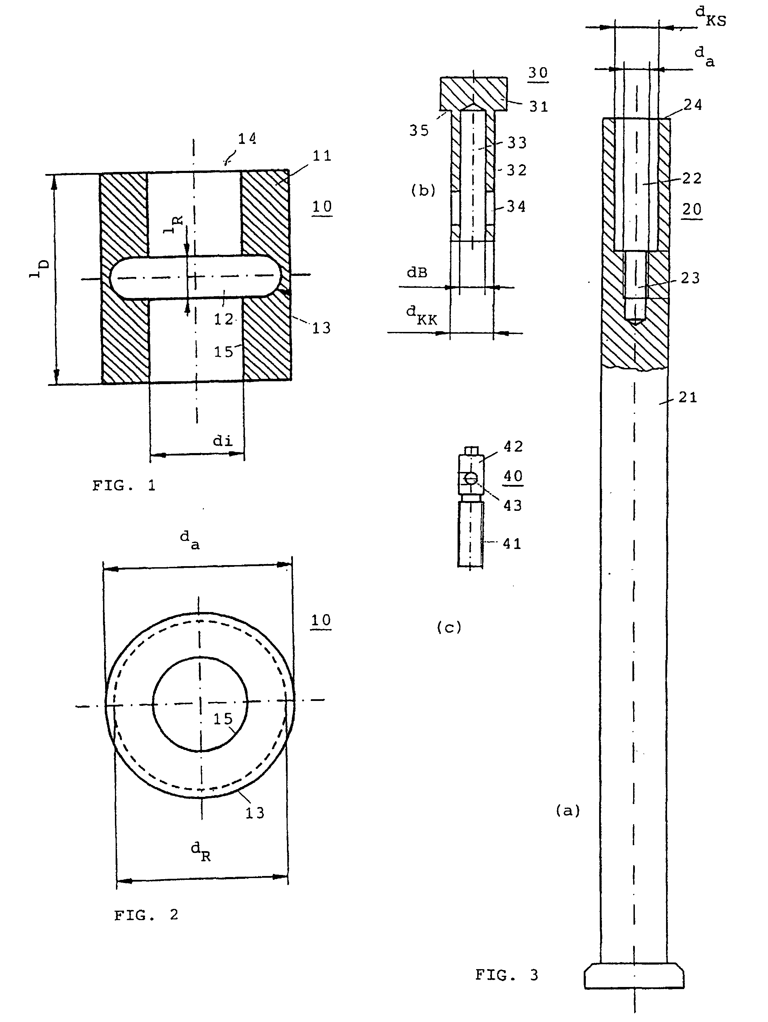

Die Fign. 1 und 2 zeigen eine Dichtungsvorrichtung zur Anwendung in einer erfindungsgemäßen Kolbendruckvorrichtung. Die Zusammensetzung der druckaktivierten Dichtung ist jedoch nicht auf diese Anwendung oder die beispielhaft genannten Materialien beschränkt, sondern vielmehr auch bei anderen Dichtungsvorrichtungen (insbesondere Vakuumdichtungen usw.) einsetzbar.

Die Dichtungsvorrichtung ist vorteilhafterweise an einem druckbeaufschlagten Kolben in einer zur Kolbenwandung (Zylinderwand) hin offenen Ausnehmung vorgesehen, deren Volumen unter Druckbeaufschlagung veränderlich ist und in der die Dichtungsvorrichtung durch den Kolben vom Druckmedium getrennt ist. Die Dichtungsvorrichtung ist so ausgelegt, daß ihr Volumen bei fehlender oder geringer Druckbeaufschlagung das Volumen der Ausnehmung formschlüssig ausfüllt, wobei in diesem Zustand die Abdichtung unter Wirkung der elastomeren Komponente erfolgt. Wenn in der Ausnehmung z.B. in Form einer Ringnut nur ein Elastomerring und mindestens ein Plastomerring nebeneinander und in Kontakt mit der Kolbenwandung angeordnet wären, so würde, da der Kolben gegenüber der Wandung beweglich ist, der Elastomerring bei hohen Drucken unter Wirkung der Reibung gegenüber der Kolbenwandung beschädigt werden z.B. durch Extrusion in den Spalt zwischen Kolben und Zylinder. Erfindungsgemäß ist daher vorgesehen, das Elastomer durch eine Schicht aus dem verformbaren Material (Plastomer) von der Kolbenwandung zu trennen. So kann die Dichtungsvorrichtung als Ringdichtung aus einer Anordnung von zwei Plastomerringen mit einem dazwischen angeordneten Elastomerring (auch: Stützring) gebildet werden, wobei der Elastomerring einen geringeren Außendurchmesser als die Plastomerringe besitzt und zwischen den Plastomerringen eine Brücke gebildet ist, die den Elastomerring von der Kolbenwandung trennt. Die Dicke der Plastomerbrücke ist somit im wesentlichen gleich dem Unterschied der Außendurchmesser der Plastomer- und Elastomerringe.

Die Bauform gemäß den Fign. 1 und 2 ist insbesondere an die Konstruktion der unten unter Bezug auf Fig. 3 beschriebenen Kolbendruckvorrichtung angepaßt. Die Dichtungsvorrichtung 10 umfaßt einen Dichtungskörper 11 (z.B. aus PTFE) in Form einer zylindrischen Hülse (geschnitten, schraffiert dargestellt). In den Dichtungskörper 11 ist ein Elastomerring 12 axialsymmetrisch eingelassen. Der Dichtungskörper 11 besitzt im wesentlichen die Form eines Hohlzylinders der Höhe 1_{D}, des Innendurchmessers dᵢ und des Außendurchmessers dₐ• Die Zylinderhöhe (Hülsenlänge) 1_{D} ist an die Breite einer Kolbenkopfnut im unbelasteten Zustand angepaßt und zur Bereitstellung einer genügend großen äußeren Oberfläche 13 in Bezug auf die Kolbenwand ausgewählt. Das Maß l_{D} beträgt vorzugsweise mindestens den dreifachen Wert der Dicke l_{R} des Elastomerrings 12. Der äußere Hülsendurchmesser dₐ ist im unbelasteten Zustand der Dichtungsvorrichtung 10 geringfügig größer als der Innendurchmesser des Kolbengefäßes (Zylinder). In Zusammenwirkung mit dem Elastomerring eines geeignet gewählten Außendurchmessers d_{R} ergibt sich somit eine gas- und flüssigkeitsdichte Abdichtung bereits im unbelasteten Zustand der Dichtungsvorrichtung 10. Der Innendurchmesser dᵢ des Dichtungskörpers ist entsprechend geringfügig kleiner als der Außendurchmesser des entsprechenden Kolbenabschnittes, der zur Aufnahme der Dichtungsvorrichtung vorgesehen ist. Da die Dichtungsvorrichtung 10 in Bezug auf den Kolben keine oder eine nur minimale Bewegung ausführt, ist es möglich, daß der Innendurchmesser des Elastomerrings 12 im wesentlichen gleich dem Innendurchmesser dᵢ des Dichtungskörpers 11 ist. Dazu im Gegensatz ist der Außendurchmesser d_{R} des Elastomers 12 geringfügig kleiner als der Außendurchmesser dₐ des Dichtungskörpers 11, um zwischen den in Fig. 1 oberen und unteren Hülsenteilen Raum für eine Brücke zur Trennung des Elastomers 12 von der Kolbenwandung zu bilden. Dementsprechend besitzt die erfindungsgemäße Dichtungsvorrichtung in Bezug auf die abzudichtende Kolbenwandung eine geschlossene Oberfläche 13 des bei Druck verformbaren Materials (Plastomer, z.B. PTFE oder dgl.). Damit wird in jeder Phase der Druckbeaufschlagung eine gas- und flüssigkeitsdichte Abdichtung und eine abstreifende, trockene Dichtung bei Kolbenbewegung gewährleistet. Die Plastomerbrücke oder -membran besitzt den Vorteil, daß in ihrem Bereich bei Druckbeaufschlagung zuerst eine dichtende Wirkung erfolgt. Dadurch wird eine Extrusion des Plastomermaterials an unerwünschten Stellen vermieden.

Als Elastomermaterial kann ein geeignet gewählter synthetischer Kautschuk (z.B. Perbunan (registrierte Marke) oder Viton (registrierte Marke)) verwendet werden, der geeignete Elastizitäts- und Kompressionseigenschaften besitzt. Vorteilhafterweise kommt es wegen der vollständigen Trennung des Elastomeren von dem Druckfluid bei der Elastomerauswahl nicht besonders auf eine Beständigkeit gegenüber dem Druckfluid an. Damit wird die Einsetzbarkeit der Dichtungsvorrichtung wesentlich erweitert.

Fig. 3 zeigt den Aufbau einer Kolbendruckvorrichtung (Zylinder nicht dargestellt), die zur Verwendung mit der Dichtungsvorrichtung eingerichtet ist. Der Aufbau besteht aus einem Kolbensschatt 20, einem Kolben 30 (oder: Kolbenkopf) und einem Verankerungsmittel 40 zur axial verschiebbaren Anbringung des Kolbens 30 am Kolbenschaft 20.

Der Kolbenschaft 20 umfaßt eine Kolbenstange 21, an deren kolbenseitigen Ende 24 eine Bohrung 22 zur Aufnahme des Kolbens 30 und ein Gewindeteil 23 zur Befestigung des Verankerungsmittels 40 (s. unten) vorgesehen sind. Der Innendurchmesser d_{KS} der Bohrung 22 entspricht im wesentlichen dem Außendurchmesser d_{KK} des Kolbenansatzes 32. Der Gewindebereich 23 ist an das Gewinde 41 des Verankerungsmittels 40 angepaßt.

Der Kolben 30 umfaßt einen Stirnbereich 31 und einen Kolbenansatz 32, der zur Einführung in die Bohrung 22 des Kolbenschafts 20 vorgesehen ist. Der Kolbenkopfansatz 32 besitzt eine innere Bohrung 33 zur Aufnahme eines Teils des Verankerungsmittels 40 und eine radiale Ausnehmung 34 zur Zusammenwirkung mit einem Anschlag 43 des Verankerungskopfs 42. Der Anschlag 43 wird beispielsweise durch einen sich radial erstreckenden Stift gebildet, dessen Länge kleiner als der Außendurchmesser d_{KK} des Kolbenkopfeinsatzes 32 und größer als der Durchmesser d_{B} der Innenbohrung 33 des Kolbenansatzes 32 ist.

Im zusammengesetzten Zustand wirken die Teile der Kolbendruckvorrichtung derart zusammen, daß der Kolben 30 mit der aufgeschobenen Dichtungsvorrichtung und dem eingesetzten Verankerungsmittel 40 in die Bohrung 22 des Kolbenschafts 20 eingeführt und am Gewindebereich 23 festgeschraubt wird, bis die Dichtungsvorrichtung, insbesondere der Elastomerring 12, vorgespannt ist, so daß im druckfreien Zustand eine gasdichte Abdichtung gebildet wird. Da die Ausnehmung 34 des Kolbenansatzes 32 in axialer Richtung ein Langloch bildet, ist der Kolben 30 in axialer Richtung in Bezug auf den Kolbenschaft 20 beweglich. Damit wird die Druckkraft von der Kolbenstange über die Dichtung auf den Kolbenkopf und umgekehrt vom Druckmedium über den Kolben auf die Kolbenstange ausgeübt. Der Stift 43 dient ausschließlich der Drehmomentübertragung beim Einschrauben des Kolbenkopfes und der Mitnahme des Kolbenkopfes bei einer Rückwärtsbewegung.

Die Maße des Kolbens 30 und des Kolbenschafts 20 sind derart gewählt, daß bei eingesetztem Kolben durch den Stirnbereich 31 und das kolbenseitige Ende des Kolbenschafts 20 und einen freistehenden Abschnitt des Kolbenansatzes 32 eine Ringnut oder Ausnehmung zur Aufnahme der Dichtungsvorrichtung 10 gebildet wird. Die Breite der Ringnut (Abstand der kolbenschaftseitigen Oberfläche 35 des Stirnbereichs 31 vom kolbenseitigen Ende 24 des Kolbenschafts 20) ist durch die axiale Beweglichkeit des Kolbenkopfs 30 veränderlich. Demgemäß kann die Dichtungsvorrichtung 10 bei Druckbeaufschlagung des Kolbenkopfes durch dessen Bewegung hin zum Kolbenschaft komprimiert werden, so daß sich die gewünschte Dichtungsfunktion ergibt.

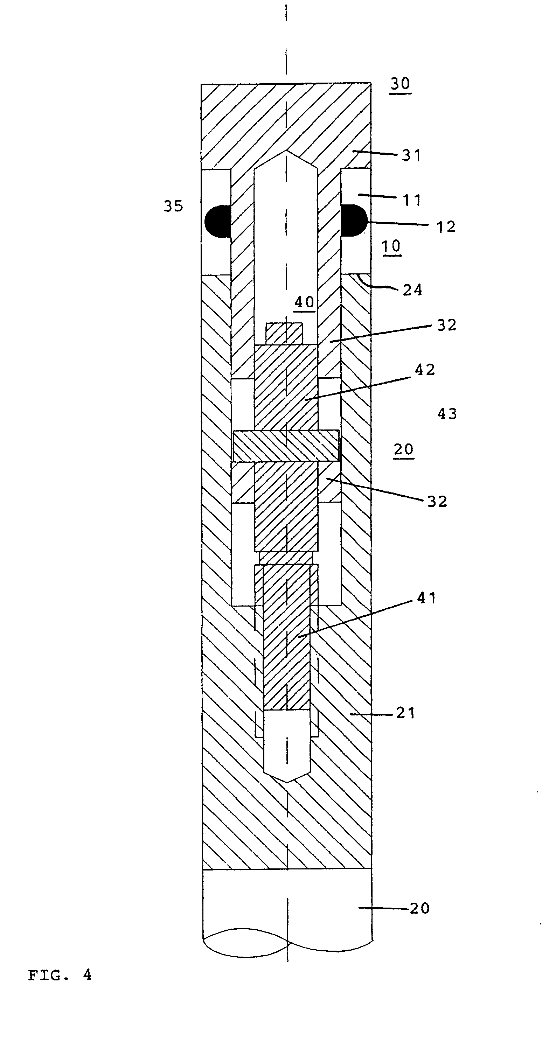

Die Funktion der erfindungsgemäßen Druckvorrichtung wird anhand der gegenüber Fig. 3 vergrößerten Darstellung der Zusammensetzung aus Kolbenschaft, Dichtungsvorrichtung und Kolben mit dem Verankerungsmittel gemäß Fig. 4 erläutert. Die erfindungsgemäße Kolbendruckvorrichtung (ohne Zylinder dargestellt) besteht aus dem Kolben 30, der über die Verankerungseinrichtung 40 mit dem Kolbenschaft 20 axial verschiebbar in Verbindung steht, wobei zwischen dem Stirnbereich 31 des Kolbens 30 und dem kolbenseitigen Ende 24 des Kolbenschafts 20 eine Ausnehmung zur Aufnahme der Dichtungsvorrichtung 10 gebildet wird. Im Betriebszustand wird der Kolben 30 unter Wirkung der Druckkraft in die Bohrung 22 des Kolbenschafts 20 am Ende der Kolbenstange 21 geschoben. Dadurch wird die Dichtungsvorrichtung 10 zwischen der Oberfläche 35 des Stirnbereichs 31, der Oberfläche 24 der Kolbenstange 21, der Außenfläche des Kolbenansatzes 32 und der abzudichtenden Innenwand des (nicht dargestellten) Druckzylinders komprimiert. Dadurch ist eine allseitige Abdichtung gegeben, wobei eine Komprimierung der Dichtungsvorrichtung im wesentlichen ohne deren direkten Kontakt mit dem Druckmedium erfolgt. Bei geringen Druckkräften (Unterdruck oder im normalen Druckbereich oder bei geringem Überdruck) erfolgt die Abdichtung durch die elastischen Kräfte des Elastomerringes 12. Diese elastischen Kräfte werden erfindungsgemäß durch eine Vorspannung der Dichtungsvorrichtung 10 in der Ausnehmung zwischen Kolben und Kolbenschaft erzeugt. Die Vorspannung wird, wie oben beschrieben, durch Einschrauben des Kolbens (Drehung des Stirnbereichs 31 gegenüber dem Kolbenschaft 20) eingestellt. Diese Drehung wird durch den Stift 43 auf das Verankerungsmittel 40 übertragen, das dadurch mit seinem Gewindeteil 41 in das Gewinde 23 des Kolbenschafts 21 hineingeschraubt wird. Dadurch verringert sich die Breite der zwischen Kolben und Kolbenschaft gebildeten Ausnehmung, in der sich die Dichtungsvorrichtung befindet. Das Langloch 34, das sich axial im Kolbenansatz 32 erstreckt, ermöglicht die weitere Verringerung der Breite der Ausnehmung und somit die weitere Komprimierung der Dichtungsvorrichtung unter Wirkung der Druckkräfte. Gleichzeitig stellt der Stift 43 eine Sicherung gegen eine Trennung des Kolbens vom Kolbenschaft bei Rückwärtsbewegungen dar.

Die erfindungsgemäße Kolbendruckvorrichtung besitzt die folgenden Vorteile. Die Dichtung ist gas- und flüssigkeitsdicht. Die Dichtung arbeitet durch den Einsatz des unter Druck stehenden, plastisch deformierbaren Materials abstreifend, so daß sich kein Flüssigkeitsfilm zwischen der Dichtungsvorrichtung und dem Zylinder bildet. Die Dichtungsvorrichtung ist im wesentlichen vom Druckmedium getrennt, so daß ein Einsatz mit beliebigen Flüssigkeitsproben möglich ist. Die Kolbendruckvorrichtung ist miniaturisierbar, so daß ein Einsatz in kleinen, tragbaren Hochdruckeinrichtungen möglich wird. Dies war bisher wegen der komplizierten mechanischer Strukturen herkömmlicher Dichtungskomponenten möglich. Der Einschluß von Luft oder flüssigen Medien in der Dichtung ist ausgeschlossen, so daß eine Befüllung des Hochdruckzylinders bzw. eine Entlüftung ohne Schwierigkeiten möglich ist. Ferner besteht der Vorteil, daß durch das als Schiebegelenk wirkende Verankerungsmittel 40 sichergestellt wird, daß der Kolben bei Druckentlastung mit dem Kolbenschaft mitgezogen wird. Ferner besitzt die Kolbendruckvorrichtung keinen toten Gang. Bei Druckentlastung wird der Kolbenaufbau zurückgedrückt, wobei die Mitnahme des Kolbens mit dem Stift 43 der Überwindung von Reibungskräften dient. Der fehlende tote Gang ist besonders wichtig für die reproduzierbare, genaue Einstellung höchster Drucke allein durch die Verschiebung des Kolbenaufbaus zu einer vorbestimmten Position.

Eine Hochdruckeinrichtung umfaßt eine erfindungsgemäße Kolbendruckvorrichtung, ein Fluidsystem und einen Probenraum oder ein weiteres Stellglied. Das Fluidsystem kann entsprechend der erfindungsgemäßen Verfahrensweise beim Betrieb einer Koibendruckvorrichtung unter Normaldruck oder sogar unter erhöhtem Druck gefüllt werden. Eine Evakuierung des Fluidsystems bzw. Entlüftung der Dichtung ist nicht erforderlich. Nach vollständiger Befüllung wird das Fluidsystem druckdicht verschlossen und die Hochdruckeinrichtung kann in Betrieb genommen werden.

Die erfindungsgemäße Dichtung kann in vorteilhafter Weise zur Druckerzeugung für Experimente, technische Prozesse und für Produktionsprozesse auch für niedrigviskose Fluide eingesetzt werden. Dies bedeutet, daß das Druckmedium in den Druckgefäßen und -leitungen leicht ausgewechselt bzw. aus den Druckbereichen leicht entfernt werden kann (durch Verdampfenlassen von Fluidresten). Im Unterschied zu herkömmlichen Druckvorrichtungen mit "schwimmenden" Dichtungen (mit Ölfilm) ist erfindungsgemäß eine stationäre Druckausbildung ohne ein Erfordernis zum Nachpumpen möglich.

## Patentansprüche

1. Kolbendruckvorrichtung mit einer Dichtungsvorrichtung (10) zur Abdichtung zwischen Bereichen unterschiedlicher Drucke, die als erste Komponente ein Elastomer (12) und als zweite Komponente ein unter Druck plastisch verformbares Material enthält, wobei die Komponenten eine Abdichtung bei verschiedenen Druckunterschieden gewährleisten, einem Kolben (30) und einem Kolbenschaft (20), wobei der Kolben (30) in Bezug auf den Kolbenschaft (20) axial verschiebbar ist und die Dichtungsvorrichtung (10) formschlüssig in einer Ausnehmung zwischen dem Kolben (30) und dem Kolbenschaft (20) angeordnet ist, **dadurch gekennzeichnet,**
**daß** die Dichtungsvorrichtung (10) eine hohlzylindrische Hülse ist, die aus dem unter Druck plastisch verformbaren Material (11) besteht, in das axialsymmetrisch ein Ring aus dem Elastomer (12) eingelassen ist, dessen Außendurchmesser kleiner als der Außendurchmesser der Hülse ist, so daß das Elastomer von einer abzudichtenden Zylinderwand durch das unter Druck plastisch verformbare Material (11) getrennt ist.

2. Kolbendruckvorrichtung gemäß Anspruch 1, bei der Verankerungsmittel (40) zur Verbindung des Kolbens (30) mit dem Kolbenschaft (20) vorgesehen sind.

3. Kolbendruckvorrichtung gemäß Anspruch 2, bei der die Verankerungsmittel (40) einen Gewindebereich (41) zur Verbindung mit dem Kolbenschaft (20) und ein Eingriffsmittel (43) umfassen, das dazu eingerichtet ist, für einen Kolbenansatz (32) des Kolbens (30) einen Anschlag für eine axiale Rückzugsbewegung des Kolbens (30) zu bilden.

4. Kolbendruckvorrichtung gemäß einem der vorhergehenden Ansprüche, bei der die Dichtungsvorrichtung (10) von der Oberfläche der Ausnehmung zwischen dem Kolben (30) und dem Kolbenschaft (20) und einer angrenzenden Innenoberfläche eines Zylinders begrenzt ist und zum Druckmedium hin lediglich durch den Spielraum zwischen dem Kolben und dem Zylinder freiliegt.

5. Kolbendruckvorrichtung gemäß einem der vorhergehenden Ansprüche, bei der das Elastomer (12) ein synthetischer Kautschuk und das unter Druck plastisch verformbare Material (11) Polytetrafluorethylen oder ein Tetrafluorethylen-Copolymer ist.

6. Kolbendruckvorrichtung gemäß einem der vorhergehenden Ansprüche, bei der im druckentlasteten Zustand die axiale Breite der Ausnehmung zwischen dem Kolben (30) und dem Kolbenschaft (20) so gewählt ist, daß die Dichtungsvorrichtung (10) einer Vorspannung ausgesetzt ist.

7. Kolbendruckvorrichtung gemäß Anspruch 6, bei der die axiale Breite durch eine Gewindeverstellung des Kolbens gegenüber dem Kolbenschaft einstellbar ist.

## Claims

1. Pressure piston arrangement comprising a seal device (10) for sealing between regions of different pressures, which contains an elastomer (12) as first component and, as second component, a material which is plastically deformable under pressure, the components ensuring a seal in the case of various pressure differences, and comprising a piston (30) and a piston shaft (20), the piston (30) being axially displaceable relative to the piston shaft (20) and the seal device (10) being disposed in a form-fitting manner in a recess between the piston (30) and the piston shaft (20),
**characterised in that**
the seal device (10) is a hollow cylindrical shell which comprises a material (11) which is plastically deformable under pressure, in which material there is embedded, axially symmetrically, a ring made of the elastomer (12), the external diameter of which is smaller than the external diameter of the shell, so that the elastomer is separated from a cylinder wall which is to be sealed by means of the material (11) which is plastically deformable under pressure.

2. Pressure piston arrangement according to claim 1, in which anchoring means (40) are provided for connection of the piston (30) to the piston shaft (20).

3. Pressure piston arrangement according to claim 2, in which the anchoring means (40) comprise a threaded region (41) for connection to the piston shaft (20) and an engagement means (43), which is provided in order to form a limit stop for an axial return movement of the piston (30) for a piston extension (32) of the piston (30).

4. Pressure piston arrangement according to one of the preceding claims, in which the seal device (10) is delimited by the surface of the recess between the piston (30) and the piston shaft (20) and an adjoining internal surface of a cylinder and is exposed towards the pressure medium merely through the clearance between the piston and the cylinder.

5. Pressure piston arrangement according to one of the preceding claims in which the elastomer (12) is a synthetic rubber and the material (11) which is plastically deformable under pressure is polytetrafluoroethylene or a tetrafluoroethylene copolymer.

6. Pressure piston arrangement according to one of the preceding claims in which the axial width of the recess between the piston (30) and the piston shaft (20) in the pressure-relieved state is chosen such that the seal device (10) is subjected to a prestressing.

7. Piston pressure arrangement according to claim 6, in which the axial width can be adjusted by means of a threaded adjustment of the piston relative to the piston shaft.

## Revendications

1. Dispositif de production de pression avec un dispositif d'étanchéité (10) pour assurer une étanchéité entre des zones placées sous des pressions différentes, qui comprend comme premier composant un élastomère (12) et comme deuxième composant un matériau pouvant faire l'objet d'une déformation plastique sous pression, les composants garantissant une étanchéité pour différentes différences de pression, avec un piston (30) et avec une tige de piston (20), le piston (30) pouvant être déplacé dans le sens axial par rapport la tige de piston (20) et le dispositif d'étanchéité (10) étant disposé en complémentarité de forme dans un évidement pratiqué entre le piston (30) et la tige de piston (20), **caractérisé en ce que** le dispositif d'étanchéité (10) est une douille cylindrique creuse qui se compose du matériau pouvant faire l'objet d'une déformation plastique sous pression (11), dans lequel est placée en symétrie axiale une bague réalisée avec l'élastomère (12) et dont le diamètre extérieur est inférieur au diamètre extérieur de la douille, de sorte que l'élastomère est séparé par le matériau pouvant faire l'objet d'une déformation plastique sous pression (11) d'une paroi de cylindre à rendre étanche.

2. Dispositif de production de pression selon la revendication 1, **caractérisé en ce que** des éléments d'ancrage (40) sont prévus pour relier le piston (30) avec la tige de piston (20).

3. Dispositif de production de pression selon la revendication 2, **caractérisé en ce que** les éléments d'ancrage (40) comprennent une zone filetée (41) pour assurer une liaison avec la tige de piston (20) et un élément d'engrènement (43), qui est conçu pour former, pour un épaulement (32) du piston (30), une butée pour un mouvement axial de retour du piston (30).

4. Dispositif de production de pression selon l'une des revendications précédentes, **caractérisé en ce que** le dispositif d'étanchéité (10) est délimité par rapport à la surface de l'évidement pratiqué entre le piston (30) et la tige de piston (20) et par rapport à une surface intérieure adjacente d'un cylindre et n'est libre en direction du fluide sous pression que par le jeu existant entre le piston et le cylindre.

5. Dispositif de production de pression selon l'une des revendications précédentes, **caractérisé en ce que** l'élastomère (12) est un caoutchouc synthétique et le matériau pouvant faire l'objet d'une déformation plastique sous pression (11) est du polytétrafluoréthylène ou un copolymère de trafluoréthylène.

6. Dispositif de production de pression selon l'une des revendications précédentes, **caractérisé en ce que**, dans l'état de décharge de la pression, la largeur axiale de l'évidement pratiqué entre le piston (30) et la tige de piston (20) est choisie de telle manière que le dispositif d'étanchéité (10) soit soumis à une précontrainte.

7. Dispositif de production de pression selon la revendication 6, **caractérisé en ce que** la largeur axiale peut être réglée à l'aide d'un ajustement par vis du piston par rapport à la tige de piston.
